# EUROPÄISCHE PATENTANMELDUNG

(11) **EP 0 616 025 A1**
(43) Veröffentlichungstag der Anmeldung: **21.09.1994**
(21) Anmeldenummer: 94103933.1
(22) Anmeldetag: 14.03.1994
(51) Int. Cl.: C11B 1/10

(54) **Verfahren zur Gewinnung von Lipidfraktionen aus pulverförmigen Eiprodukten**

(30) Priorität: 15.03.1993 DE 4307980
(71) Anmelder: SKW Trostberg Aktiengesellschaft, D-83308 Trostberg (DE)
(72) Erfinder: Heidlas, Jürgen, Dr., D-83308 Trostberg (DE); Cully, Jan, Dr., D-84518 Garching (DE); Michlbauer, Franz, D-84558 Kirchweidach (DE); Vollbrecht, Heinz-Rüdiger, Dr., D-83352 Altenmarkt (DE)
(74) Vertreter: Huber, Bernhard, Dipl.-Chem.

(57) **Zusammenfassung**

Es wird ein Verfahren zur Gewinnung von Lipidfraktionen aus pulverförmigen Eiprodukten mit einem Gehalt an Phospholipiden beschrieben, wobei man das Eiprodukt
a) mit flüssigem Propan bei einem Druck ≦ 200 bar und einer Temperatur ≦ 70°C und
b) einem Schleppmittel, bestehend aus einem aliphatischen Alkohol mit 1 bis 4 C-Atomen
extrahiert.

Auf diese Weise ist es möglich, Lipidfraktionen mit guten sensorischen Eigenschaften herzustellen, deren Gehalt an Phospholipiden mindestens 20 Gew.-% beträgt.

## Beschreibung

Die vorliegende Erfindung betrifft ein Verfahren zur Gewinnung von Lipidfraktionen aus pulverförmigen Eiprodukten mit einem hohen Gehalt an Phospholipiden.

Lipidfraktionen auf Eibasis finden aufgrund ihrer physiologischen und funktionellen Eigenschaften vielseitige Anwendung im Lebensmittelbereich (insbesondere bei der Herstellung von Diätprodukten) sowie in der pharmazeutischen und kosmetischen Industrie. Ernährungsphysiologisch besonders interessant sind hierbei solche Lipidfraktionen, die einen hohen Gehalt an Phospholipiden (Lecithin) aufweisen, da in dieser Fraktion wertvolle mehrfach ungesättigte Fettsäuren, vor allem Arachidonsäure, enthalten sind.

Die Gewinnung dieser Lipidfraktionen aus Eiprodukten erfolgte nach den bisher bekannten Verfahren (vgl. beispielsweise EP-A 74251) durch Extraktion mit organischen Lösemitteln wie z.B. Chloroform oder Aceton. Ganz abgesehen davon, daß die Extraktion in jedem Fall mehrstufig erfolgen mußte, weisen die eingesetzten Lösemittel noch den Nachteil auf, daß die entsprechenden Lösemittelrückstände gesundheitlich nicht unbedenklich sind. Außerdem können sie (insbesondere im Falle von Aceton) geschmackliche Veränderungen in den betreffenden Produkten hervorrufen, wodurch diese in ihrer sensorischen Qualität sehr stark beeinträchtigt werden.

Der vorliegenden Erfindung liegt daher die Aufgabe zugrunde, ein Verfahren zur Gewinnung von pulverförmigen Lipidfraktionen aus Eiprodukten zu entwickeln, welches die genannten Nachteile des Standes der Technik nicht aufweist, sondern es mit einem geringen technischen Aufwand ermöglicht, Lipidfraktionen mit einem relativ hohen Gehalt an Phospholipiden und guten sensorischen Eigenschaften zu gewinnen.

Diese Aufgabe wird erfindungsgemäß dadurch gelöst, daß man das Eiprodukt
a) mit flüssigem Propan bei einem Druck ≦ 200 bar und einer Temperatur ≦ 70°C und
b) einem Schleppmittel, bestehend aus einem aliphatischen Alkohol mit 1 bis 4 C-Atomen
extrahiert.

Es hat sich nämlich überraschenderweise gezeigt, daß man mit Hilfe dieses Solvensgemisches Lipidfraktionen mit einem Phospholipidgehalt von mehr als 20 Gew.-% und guten sensorischen Eigenschaften schonend herstellen kann. Für das erfindungsgemäße Verfahren werden pulverförmige Produkte auf Eibasis, wie z.B. Eigelbpulver oder Volleipulver oder Produkte, die diese Stoffe enthalten, eingesetzt, welche einen die Aufarbeitung lohnenden Gehalt an Phospholipiden, vorzugsweise wenigstens 5 Gew.-%, aufweisen. Es ist erfindungswesentlich, daß die Extraktion mit Propan in flüssigem Zustand bei einem Druck ≦ 200 bar und einer Temperatur ≦ 70°C in Gegenwart eines Schleppmittels, bestehend aus einem aliphatischen Alkohol mit 1 bis 4 C-Atomen durchgeführt wird. Die Untergrenze für Druck und Temperatur ergibt sich aus der Bedingung, das Propan flüssig einzusetzen für jede gewählte Temperatur- bzw. Druckbedingung aus dem Zustandsdiagramm des Propans.

Erfindungsgemäß wird sichergestellt, daß sowohl die Fette als auch die Phospholipide (insbesondere Lecithin) im Extraktionsmedium gelöst werden. Aufgrund der empfindlichen Eigenschaften der weiteren Inhaltsstoffe von Eiprodukten, insbesondere der Proteine, wird die Extraktion vorzugsweise in einem Druckbereich von 10 bis 100 bar und einer Extraktionstemperatur zwischen 20 und 60°C durchgeführt. Auf diese Weise wird eine Denaturierung der Proteine im Extraktionsrückstand vermieden, so daß auch diese proteinreiche Eifraktion weiter verwertet werden kann.

Als Schleppmittel, welches vorzugsweise in einer Menge von 1 bis 20 Gew.-%, bezogen auf die Propangasmenge, verwendet wird, werden beim erfindungsgemäßen Verfahren kurzkettige aliphatische Alkohole mit 1 bis 4 C-Atomen verwendet, nämlich Methanol, Ethanol, Propanol, Isopropanol, Butanol, Isobutanol oder Tertiärbutanol. Aus toxikologischen Gründen wird vorzugsweise Ethanol eingesetzt.

Die eingesetzte Propangasmenge kann in weiten Grenzen variiert werden und richtet sich im wesentlichen nach der Menge des zu entfernenden Gehaltes an Fetten bzw. Phospholipiden. In der Regel reichen 1 bis 30 kg pro kg Ausgangsmaterial aus, um eine zufriedenstellende Ausbeute an der gewünschten Lipidfraktion zu erzielen. Im Rahmen der vorliegenden Erfindung ist es auch möglich, das Propan im Gemisch mit Butan einzusetzen. Der Zusatz kann bis 45 Gew.-% betragen.

Im Anschluß an die Extraktion können die im Extraktionsmedium gelösten Fette und Phospholipide durch Verdampfung und/oder Druckabsenkung aus dem Propan/Alkohol-Gemisch wieder abgeschieden werden.

Eine weitere Möglichkeit zur Abscheidung der Extrakte aus dem Extraktionsmedium besteht darin, das Propan in die Nähe der kritischen Zustandsparameter (pₖ = 42 bar, Tₖ = 96°C) zu bringen, wobei es zur gewünschten Abscheidung kommt. Diese Verfahrensvariante ist deshalb besonders vorteilhaft, weil keine Energie zum Phasenwechsel des Solvens (Verdampfungs- bzw. Kondensationsenergie) erforderlich ist.

Gemäß einer bevorzugten Ausführungsform wird zur Entfernung von Schleppmittelresten aus dem Extrakt und dem Extraktionsrückstand nach der Extraktion unter Schleppmittelzusatz eine Nachextraktion mit Propan (ohne Schleppmittel) durchgeführt, die vorzugsweise im gleichen Druck- und Temperaturbereich wie die Extraktion durchgeführt wird. Die vollständige Abscheidung des Schleppmittels aus dem Propangas kann nach üblichen Methoden und mit den bekannten Vorrichtungen, wie z.B. Tröpfchenabscheider oder entsprechende Filtersysteme vorgenommen werden, so daß das Propangas anschließend nach Verflüssigung und/oder Verdichtung wieder für die Extraktion der Eiprodukte zur Verfügung steht. Auf diese Weise kann eine geringe Menge an Propangas ständig im Kreis geführt werden, wodurch die Wirtschaftlichkeit des Verfahrens deutlich erhöht wird.

Mit Hilfe des erfindungsgemäßen Verfahrens ist es möglich, Lipidfraktionen aus pulverförmigen Eiprodukten mit guten sensorischen Eigenschaften herzustellen, deren Gehalt an Phospholipiden mindestens 20 Gew.-% beträgt.

Die nachfolgenden Beispiele sollen die Erfindung näher erläutern:

### Beispiel 1

1000 g Eigelbpulver (Gesamtfett: 60 Gew.%, Fett: 45 Gew.-%, Phospholipide: 15 Gew.-%) werden bei 20 bar und 45°C in einem 4-l-Druckautoklaven innerhalb von 30 Minuten von 5 kg verdichtetem Propan durchströmt, dem 4 Gew.-% Ethanol als Schleppmittel zugespeist wird. Anschließend wird für die Nachextraktion des Rückstandes zur Entfernung von Schleppmittelresten in 90 Minuten mit weiteren 15 kg Propan ohne Schleppmittel extrahiert. Der Prozeß wird im Kreis geführt, wobei die Extraktabscheidung durch Verdampfen des Propans im Abscheider erzielt wird. Nach vollständigem Entfernen des Schleppmittels vom Extrakt werden 540 g Extrakt ausgewogen und analysiert: Fett (Triglyceride): 78 Gew.-%, Phospholipide: 20 Gew.-%.

### Beispiel 2

1000 g Eigelbpulver (Gesamtfett: 60 Gew.-%, Fett: 45 Gew.-%, Phospholipide: 15 Gew.-%) werden bei 100 bar und 50°C in einem 4-l-Druckautoklaven innerhalb von 30 Minuten von 5 kg verdichtetem Propan durchströmt, dem 10 Gew.-% Ethanol als Schleppmittel zugespeist wird. Anschließend wird in 90 Minuten mit weiteren 15 kg Propan ohne Schleppmittel extrahiert. Der Prozeß wird im Kreis geführt, wobei die Extraktabscheidung durch Verdampfen des Propans im Abscheider erreicht wird. Nach vollständigem Entfernen des Schleppmittels vom Extrakt werden 580 g Extrakt ausgewogen und analysiert: Fett (Triglyceride): 75 Gew.-%, Phospholipide: 23 Gew.-%.

## Patentansprüche

1. Verfahren zur Gewinnung von Lipidfraktionen aus pulverförmigen Eiprodukten mit einem Gehalt an Phospholipiden,
**dadurch gekennzeichnet**,
daß man das Eiprodukt
a) mit flüssigem Propan bei einem Druck ≦ 200 bar und einer Temperatur ≦ 70°C und
b) einem Schleppmittel, bestehend aus einem aliphatischen Alkohol mit 1 bis 4 C-Atomen
extrahiert.

2. Verfahren nach Anspruch 1,
**dadurch gekennzeichnet**,
daß man die Extraktion bei einem Druck von 10 bis 100 bar durchführt.

3. Verfahren nach den Ansprüchen 1 und 2,
**dadurch gekennzeichnet**,
daß die Extraktionstemperatur zwischen 20 und 60°C liegt.

4. Verfahren nach den Ansprüchen 1 bis 3,
**dadurch gekennzeichnet**,
daß man 1 bis 20 Gew.-% an Schleppmittel, bezogen auf die Propangasmenge verwendet.

5. Verfahren nach den Ansprüchen 1 bis 4,
**dadurch gekennzeichnet**,
daß man als Schleppmittel Ethanol einsetzt.

6. Verfahren nach den Ansprüchen 1 bis 5,
**dadurch gekennzeichnet**,
daß man pro kg Ausgangsmaterial 1 bis 30 kg Propan einsetzt.

7. Verfahren nach den Ansprüchen 1 bis 6,
**dadurch gekennzeichnet**,
daß die Lipidfraktion durch Verdampfung und/oder Druckabsenkung aus dem Propan/Alkohol-Gemisch abgeschieden wird.

8. Verfahren nach den Ansprüchen 1 bis 7,
**dadurch gekennzeichnet**,
daß man zur Entfernung von Schleppmittelresten aus dem Extraktionsrückstand und dem Extrakt eine Nachextraktion mit Propan durchführt.

9. Verfahren nach Anspruch 8,
**dadurch gekennzeichnet**,
daß man die Nachextraktion im gleichen Druck- und Temperaturbereich wie die Extraktion durchführt.

10. Verfahren nach den Ansprüchen 1 bis 9,
**dadurch gekennzeichnet**,
daß man das Propan im Gemisch mit Butan verwendet.
